(19) Europäisches Patentamt
European Patent Office
Office européen des brevets

(11) Numéro de publication : **0 400 715 B1**

(12) # FASCICULE DE BREVET EUROPEEN

(45) Date de publication du fascicule du brevet : **09.02.94 Bulletin 94/06**

(51) Int. Cl.$^5$ : **C08F 4/651**, C08F 10/00

(21) Numéro de dépôt : **90201280.6**

(22) Date de dépôt : **21.05.90**

(54) **Suspensions de particules contenant des composés de métaux de transition dans des huiles.**

(30) Priorité : **29.05.89 FR 8907141**

(43) Date de publication de la demande : **05.12.90 Bulletin 90/49**

(45) Mention de la délivrance du brevet : **09.02.94 Bulletin 94/06**

(84) Etats contractants désignés : **AT BE DE DK ES FR GB GR IT NL SE**

(56) Documents cités :
**EP-A- 0 065 700**
**EP-A- 0 261 727**
**DE-A- 1 495 981**
**FR-A- 1 433 944**

(73) Titulaire : **SOLVAY (Société Anonyme)**
**Rue du Prince Albert, 33**
**B-1050 Bruxelles (BE)**

(72) Inventeur : **Costa, Jean-Louis**
**Vinkenstraat, 38**
**B-1850 Grimbergen (BE)**

(74) Mandataire : **Husemann, Claude et al**
**SOLVAY Département de la Propriété Industrielle 310, Rue de Ransbeek**
**B-1120 Bruxelles (BE)**

EP 0 400 715 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne des suspensions de particules contenant des composés de métaux de transition dans des huiles. Elle concerne également des procédés de polymérisation d'alpha-oléfines effectués en présence de ces suspensions.

Beaucoup de procédés récents de fabrication de particules contenant des composés solides de métaux de transition (halogénures de titane supportés ou non), utilisables pour la polymérisation des oléfines donnent naissance à de fines poudres de morphologie très régulière (microsphères de distribution granulométrique très étroite). Pareille morphologie présente des avantages, non seulement parce que le transport et le stockage de ces particules sont rendus plus aisés, mais aussi parce que cette morphologie facilite la conduite et le contrôle des polymérisations effectuées en leur présence.

En pratique, jusqu'à présent, ces particules ont été manipulées, conditionnées et utilisées soit sous la forme de suspensions dans des diluants hydrocarbonés inertes, de préférence les diluants éventuellement utilisés pour la polymérisation subséquente, soit sous la forme de particules sèches.

Il est vrai que dans le brevet FR-A-1433944 (THE GOODYEAR TIRE & RUBBER COMPANY), on a aussi décrit des "compositions suspensoïdes" de sels solides de métaux de transition, utilisables comme constituants catalytiques pour la polymérisation stéréospécifique des oléfines, dans des hydrocarbures "semi-solides" ou visqueux, qui les protègent de certains facteurs contaminants tels que l'air et l'eau au cours de leur manipulation, conditionnement, transport et utilisation. Ces compositions rendent impossible le dépôt de certains constituants du catalyseur, fournissent un système plus homogène et simplifient le dosage des constituants. En pratique toutefois, les dimensions des particules de ces sels sont relativement élevées (comprises entre 175 et 74 μm); selon les exemples, on fabrique des suspensions de cristaux de tétraiodure de titane dans l'huile de vaseline. Le brevet ne fournit aucune indication quant à la distribution granulométrique des particules.

Or, on a maintenant découvert que les microsphères de distribution granulométrique très étroite décrites plus haut peuvent, contre toute attente, donner naissance à des suspensions très stables dans les huiles. Cette découverte revêt un caractère inattendu, car on ne pouvait raisonnablement prévoir que de fines particules présentant une morphologie aussi uniforme ne décanteraient pas rapidement dans les huiles.

La présente invention concerne dès lors des suspensions de particules contenant un composé (T) de métal de transition dans une huile, ces particules étant sphéroïdales, de rapport D/d entre leur grand axe (D) et leur petit axe (d) inférieur à 2 et de distribution granulométrique étroite, de rapport $D_w/D_n$ entre leur diamètre moyen en poids ($D_w$) et leur diamètre moyen en nombre ($D_n$) inférieur à 3.

Les particules suspendues dans une huile conformément à l'invention contiennent un composé de métal de transition (T). Ce composé peut être le constituant principal des particules ou peut ne représenter qu'une partie, même mineure, de la composition chimique totale desdites particules.

Le composé (T) est généralement choisi parmi les composés de métaux des groupes IVa à VIa du Tableau Périodique des Eléments (version publiée dans Kirk-Othmer Encyclopedia of Chemical Technology, 2nd edition, vol. 8, page 94, 1965); il est fréquemment choisi parmi les composés du titane, de préférence parmi les composés halogénés et tout particulièrement parmi les composés chlorés de ce métal.

Les particules contenant un composé (T) selon l'invention sont en général le constituant solide des catalyseurs de polymérisation d'oléfines appartenant à la famille connue de l'homme du métier sous le nom de catalyseurs Ziegler-Natta.

Des exemples de particules dont le composé (T) n'entre que pour une partie dans la composition chimique sont les particules de catalyseurs Ziegler-Natta dits "supportés". Le support du composé (T) est généralement de nature inorganique. Il contient fréquemment des halogénures de magnésium, en particulier des chlorures de magnésium dont le spectre de diffraction des rayons X diffère du spectre normal de ce composé.

Tant le support que le composé (T) peuvent être associés à ou contenir des composés électrodonneurs, en particulier des esters.

Des particules de catalyseurs supportés du type Ziegler-Natta sphéroïdales et de distribution granulométrique étroite et qui peuvent donc être suspendues dans une huile selon l'invention, sont décrites, par exemple et à titre non limitatif, dans les brevets EP-B-0065700 (ENICHEM ANIC) et 0143002 (BP CHEMICALS).

Des exemples de particules dont le composé (T) est le constituant principal sont les particules à base d'halogénures solides de métaux des groupes IVa à VIa.

Typiquement, il s'agit de particules dont plus de 50 % du poids total et souvent plus de 60 % du poids total sont constitués d'halogénure solide du titane. De préférence, cet halogénure est le trichlorure de titane, tout particulièrement le trichlorure de titane complexé par un composé électrodonneur. Ce dernier est choisi de préférence parmi les éthers aliphatiques, en particulier ceux dont les radicaux aliphatiques comprennent de 2 à 8 atomes de carbone.

Des particules contenant du trichlorure de titane complexé par un composé électrodonneur (appelé ci-après trichlorure de titane complexé) présentant une forme sphéroïdale et une distribution granulométrique étroite peuvent être obtenues par des procédés connus impliquant une réduction initiale de tétrachlorure ou d'un tétraalkoxyde de titane par un réducteur comprenant un alkylaluminium, de préférence un alkylaluminium chloré. Le solide réduit ainsi obtenu est ensuite soumis à un traitement de complexation au moyen d'un composé électrodonneur, de préférence combiné avec ou suivi d'un traitement d'activation avec un agent choisi parmi les composés halogénés inorganiques et organiques, les composés interhalogénés et les halogènes.

Ces étapes de réduction initiale et ces traitements de complexation et d'activation du solide réduit sont bien connus et ont été amplement décrits dans la littérature. Des détails relatifs aux conditions opératoires de ces étapes et traitements peuvent être trouvés notamment dans les brevets BE-A-780758 (SOLVAY & Cie), BE-A-864708 (SUMITOMO CHEMICAL COMPANY LTD), US-A-4368304 (CHISSO CORPORATION) et US-A-4295991 (EXXON RESEARCH AND ENGINEERING CO.) ainsi que dans les documents cités dans ce dernier.

Pour la réalisation de ces étapes de réduction, ces traitements de complexation et ces traitements d'activation, le composé de départ est de préférence le tétrachlorure de titane. Le réducteur est de préférence choisi parmi les chlorures de dialkylaluminium et les ses quichlorures d'alkylaluminium dont les chaînes alkyles comprennent de 2 à 6 atomes de carbone, éventuellement complexé par un éther aliphatique, tels que ceux définis ci-dessus. Le composé électrodonneur mis en oeuvre pour le traitement de complexation est également choisi de préférence parmi ces éthers.

Quant à l'agent d'activation, il est choisi de préférence parmi le tétrachlorure de titane, l'iode et les alkanes chlorés contenant de 2 à 8 atomes de carbone et de 2 à 6 atomes de chlore par molécule.

Un réducteur tout particulièrement préféré est le chlorure de diéthylaluminium. Des composés électrodonneurs tout particulièrement préférés sont les éthers diisoamylique et di-n-butylique. Un agent d'activation tout particulièrement préféré est le tétrachlorure de titane.

A un moment quelconque de leur préparation, mais de préférence après le traitement d'activation quand on procède à ce dernier, les particules contenant du trichlorure de titane complexé peuvent être soumises à un traitement d'activation supplémentaire qui consiste à les mettre en contact avec un agent d'activation choisi parmi les composés organoaluminiques et les produits de la réaction d'un composé organoaluminique avec un composé choisi parmi les composés hydroxyaromatiques dont le groupe hydroxyle est stériquement bloqué. Le composé organoaluminique est choisi de préférence parmi les trialkylaluminiums et les chlorures d'alkylaluminium. Parmi ces composés, les meilleurs résultats ont été obtenus avec le chlorure de diéthylaluminium. Le composé hydroxyaromatique dont le groupe hydroxyle est stériquement bloqué est généralement choisi parmi les hydroxyarylènes mono- ou polycycliques substitués par un radical alkyle secondaire ou tertiaire dans les deux positions ortho par rapport au groupe hydroxyle et, de préférence, parmi les phénols di-tert-alkylés dans les positions ortho par rapport aux groupes hydroxyles et les esters de l'acide 3-(3',5'-di-tert-butyl-4'-hydroxyphényl)propionique. Parmi ces composés, les meilleurs résultats ont été obtenus avec le 3-(3',5'-di-tert-butyl-4'-hydroxyphényl)propionate de n-octadécyle et avec le 2,6-di-tert-butyl-4-méthyl-phénol.

On trouvera d'autres détails en rapport avec le traitement d'activation supplémentaire défini ci-dessus, notamment en rapport avec la nature des composés organoaluminiques et hydroxyaromatiques, avec les conditions opératoires dans lesquelles on effectue ce traitement et avec la texture des particules obtenues, dans les brevets BE-A-803875 et FR-A-2604439 (SOLVAY & Cie).

En outre, à un moment quelconque de leur préparation, après l'étape de réduction ou le traitement de complexation, ou après les éventuels traitements d'activation, mais de préférence après l'étape de réduction, les particules peuvent être soumises à un traitement visant à diminuer leur friabilité. Ce traitement, appelé "prépolymérisation", consiste à mettre le solide en contact avec une alpha-monooléfine inférieure, telle que l'éthylène ou, mieux, le propylène, dans des conditions polymérisantes de manière à obtenir un solide contenant en général de 5 à 500 % en poids environ d'alpha-monooléfine "prépolymérisée".

Les étapes et traitements décrits ci-dessus peuvent tous être effectués en présence d'un diluant hydrocarboné inerte, généralement choisi parmi les hydrocarbures aliphatiques, cyclo-aliphatiques et aromatiques liquides, tels que les alkanes et isoalkanes liquides et le benzène.

Les particules contenant du trichlorure de titane complexé présentant une forme sphéroïdale et une distribution granulométrique étroite dont la mise en suspension dans une huile selon l'invention conduit aux meilleurs résultats sont celles résultant de la méthode de préparation préférée décrite dans le brevet FR-A-2604439. Ces particules résultent du traitement d'activation supplémentaire de précurseurs, dont la méthode de préparation préférée est, à son tour, décrite dans le brevet BE-A-780758 et qui se présentent, comme d'ailleurs les particules résultant du traitement d'activation supplémentaire, sous la forme de particules sphériques ayant en général un diamètre compris entre 5 et 100 micromètres (microns), le plus souvent entre 10 et 50 micromètres (microns), tout particulièrement entre 15 et 40 micromètres (microns). Elles sont constituées d'un agglomérat de microparticules également sphériques qui ont un diamètre compris entre 0,05 et 1 micromètre

(micron), le plus souvent entre 0,1 et 0,3 micromètre (micron) et qui sont extrêmement poreuses. Il en résulte que les particules présentent une surface spécifique supérieure à 75 $m^2/g$ et se situant le plus souvent entre 100 et 250 $m^2/g$ et une porosité totale supérieure à 0,15 $cm^3/g$ et comprise la plupart du temps entre 0,20 et 0,35 $cm^3/g$. La porosité interne des microparticules constitue la contribution la plus importante à cette porosité totale des particules, comme l'atteste la valeur élevée du volume poreux correspondant aux pores de moins de 200 x $10^{-10}$m (200Å) de diamètre, qui est supérieur à 0,11 $cm^3/g$ et la plupart du temps compris entre 0,16 et 0,31 $cm^3/g$. Ces particules de précurseurs, obtenues selon la méthode de préparation décrite dans le brevet BE-A-780758 en choisissant les conditions opératoires préférées, répondent à la formule :

$$TiCl_3.(AlRCl_2)_x.C_y$$

où R est un radical alkyle comprenant de 2 à 6 atomes de carbone, C est un composé électrodonneur tel que défini plus haut, x est un nombre quelconque inférieur à 0,20 et y un nombre quelconque supérieur à 0,009 et en général inférieur à 0,20.

Cette formule ne prend pas en compte l'éventuelle couche d'alpha-oléfine "prépolymérisée" enrobant les particules de précurseur en conséquence du traitement de "prépolymérisation" effectué, de préférence, sur le solide réduit.

Dans tous les cas, la distribution granulométrique des particules, suspendues dans une huile selon l'invention, est étroite et ces particules sont sphéroïdales.

Par "particules sphéroïdales", on entend désigner des particules dont la forme est aussi proche que possible de la forme d'une sphère et dont le rapport D/d, dans lequel D et d représentent respectivement le grand axe et le petit axe, est inférieur à 2, de préférence inférieur à 1,5. Les meilleurs résultats ont été obtenus avec des particules dont le rapport D/d est égal ou inférieur à 1,3.

La distribution granulométrique des particules peut être exprimée par le rapport de polydispersité $D_w/D_n$ dans lequel :

- $D_n$ est le diamètre moyen en nombre défini par le rapport

$$D_n = \frac{\Sigma n_i D_i}{\Sigma n_i}$$

et

- $D_w$ est le diamètre moyen en poids défini par le rapport

$$D_w = \frac{\Sigma n_i D_i^4}{\Sigma n_i D_i^3}$$

où $n_i$ représente le nombre de particules de diamètre D; $D_n$ et $D_w$ peuvent être déterminés selon les méthodes connues décrites par E.A. Collins, J.A. Davidson et C.A. Daniels dans "Review of Common Methods of Particles Size Measurement", Journal of Paint Technology, volume 47, no. 604, mai 1975 ou encore par la méthode d'analyse d'image dont le principe est décrit dans le brevet EP-B-0143002, page 5, lignes 51 à page 6, ligne 12.

La distribution granulométrique des particules suspendues dans une huile selon l'invention est généralement resserrée au point que le rapport $D_w/D_n$ est inférieur à 3. De préférence, ce rapport est inférieur à 2.

Dans le cas des particules contenant du trichlorure de titane complexé dont la suspension dans des huiles a conduit aux meilleurs résultats (voir plus haut), ce rapport est souvent inférieur à 1,5 et, dans les meilleurs des cas, compris entre 1 et 1,2, les particules étant pratiquement monodisperses.

Les huiles dans lesquelles les particules contenant un composé (T) sont suspendues selon l'invention sont généralement choisies parmi les huiles minérales et les huiles de silicone.

Par huiles minérales, on entend désigner tous les produits visqueux qui sont liquides à la température ordinaire et qui sont d'origine minérale.

Ces huiles peuvent être par exemple des huiles légères, moyennes ou lourdes provenant de la distillation des goudrons de houille ou encore des huiles obtenues au cours de la distillation fractionnée du pétrole. Ces dernières sont préférées et, parmi elles, les huiles dites "minérales" qui sont des mélanges d'hydrocarbures distillant de 225 à 400°C environ.

Par huiles de silicone, on entend désigner les fluides contenant un composé qui répond à la formule :

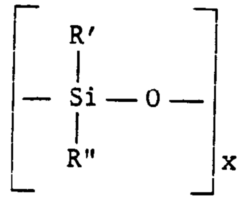

dans laquelle R' et R" sont identiques ou différents et représentent un radical choisi parmi les radicaux alkyle et alkoxy contenant de 1 à 5 atomes de carbone et les radicaux aryle et aryloxy et dans laquelle x est compris entre 3 et 2000; de préférence, R' et R" sont identiques et sont des radicaux méthyle ou phényle et x est compris entre 3 et 100.

D'excellents résultats ont été enregistrés avec les composés commerciaux dénommés indifféremment "fluides de diméthylsilicone" ou "méthylpolysiloxanes" dans la composition desquels R' et R" représentent un radical méthyle, plus spécialement avec les huiles de silicone commercialisées par exemple par RHÔNE-POULENC sous les dénominations "Rhodorsil Huiles 47", par DOW CORNING sous les dénominations "fluides no. 200" et par GENERAL ELECTRIC sous les dénominations "huiles de silicone GE".

Toutes ces huiles sont généralement caractérisées par des viscosités cinématiques comprises entre environ 0,5 et environ 30000 cSt (centistokes) ($5.10^{-6}$ à $3.10^{-2}$ $m^2/s$), de préférence entre environ 2 et environ 3000 cSt ($2.10^{-5}$ à $3.10^{-1}$ $m^2/s$).

Les particules contenant un composé (T) sont introduites dans l'huile en quantité telle qu'elles représentent généralement entre 5 et 90 % du poids total de la suspension, de préférence entre 20 et 70 % de ce poids total. Des suspensions très stables sont obtenues lorsque les particules constituent de 25 à 50 % du poids total de la suspension.

En conséquence de leurs modes de préparation les plus courants (voir plus haut), les particules à suspendre dans l'huile selon l'invention se présentent souvent sous la forme d'une suspension dans un diluant hydrocarboné inerte. Ce diluant peut être éliminé selon n'importe quelle méthode connue : par filtration, décantation, évaporation, etc. Il peut aussi être entraîné par un courant de gaz inerte que l'on fait circuler à travers la suspension hydrocarbonée à laquelle on a ajouté la quantité d'huile requise.

Selon une variante intéressante de l'invention, on peut aussi ajouter à l'huile un agent épaississant. Généralement, cet agent épaississant est à base de silice, de préférence de silice colloïdale. Des silices colloïdales, commercialisées à l'effet d'accomplir cette fonction d'agent épaississant, conviennent bien. Il s'agit par exemple des produits commercialisés par la société DEGUSSA sous la dénomination "Aerosil". Cet agent épaississant est généralement ajouté à la suspension à raison de plus de 1 % en poids par rapport au poids de particules, de préférence à raison de 2 à 15 % en poids. On a constaté que, dans ces conditions, l'addition de silice colloïdale à la suspension permet de diminuer de manière notoire la vitesse de sédimentation des particules, ce qui était prévisible mais a aussi pour effet de diminuer, dans une mesure souvent considérable, leur poids spécifique apparent après décantation, ce qui est inattendu.

L'invention concerne aussi, dans un autre de ses aspects, un procédé pour polymériser les alpha-oléfines en présence des suspensions de particules décrites plus haut.

Ces suspensions peuvent en effet être utilisées, conjointement avec un activateur organoaluminique conventionnel, pour catalyser la polymérisation des alpha-mono-oléfines dont la molécule contient de 2 à 18 et de préférence de 2 à 6 atomes de carbone, telles que l'éthylène, le propylène, le butène-1, le pentène-1, l'hexène-1, les 3- et 4-méthylpentènes-1 et le vinyl-cyclohexène. Elles s'utilisent de préférence pour la polymérisation stéréospécifique du propylène, du butène-1 et du 4-méthyl-pentène-1 en polymères cristallins, fortement isotactiques.

Elles s'utilisent également pour la copolymérisation de ces alpha-oléfines entre elles ainsi qu'avec des dioléfines comprenant de 4 à 18 atomes de carbone. De préférence, les dioléfines sont des dioléfines aliphatiques non conjuguées telles que l'hexadiène-1,4, des dioléfines monocycliques non conjuguées telles que le 4-vinylcyclohexène, des dioléfines alicycliques ayant un pont endocyclique telles que le dicyclopentadiène, le méthylène- et l'éthylènenorbornène et des dioléfines aliphatiques conjuguées telles que le butadiène ou l'isoprène.

Elles s'utilisent aussi pour la fabrication de copolymères appelés à blocs qui sont constitués à partir d'alpha-oléfines et de dioléfines. Ces copolymères à blocs consistent en des successions de segments de chaîne à longueurs variables; chaque segment consiste en un homopolymère d'une alpha-oléfine ou en un copolymère statistique comprenant une alpha-oléfine et au moins un comonomère choisi parmi les alpha-oléfines et les dioléfines. Les alpha-oléfines et les dioléfines sont choisies parmi celles mentionnées ci-dessus.

Des systèmes catalytiques comprenant les suspensions définies plus haut et un activateur organoaluminique conviennent particulièrement bien pour la fabrication d'homopolymères du propylène et de copolymères contenant au total au moins 50 % en poids de propylène et de préférence 75 % en poids de propylène.

L'activateur organoaluminique est choisi de préférence parmi les composés de formule :

$$Al\ R'''_m\ Y_{3-m}$$

où

- R''' est un radical hydrocarboné contenant de 1 à 18 atomes de carbone et de préférence de 1 à 12 atomes de carbone choisi parmi les radicaux alkyle, aryle, arylalkyle, alkylaryle et cycloalkyle; les meilleurs résultats sont obtenus lorsque R''' est choisi parmi les radicaux alkyle contenant de 2 à 6 atomes de

carbone;
- Y est un halogène choisi parmi le fluor, le chlore, le brome et l'iode; les meilleurs résultats sont obtenus lorsque Y est le chlore;
- m est un nombre quelconque tel que $0 < m \leqq 3$ et de préférence tel que $1,5 \leqq m \leqq 2,5$; les meilleurs résultats sont obtenus lorsque m est égal à 2.

Le chlorure de diéthylaluminium (DEAC) est, de manière particulièrement préférée, le constituant essentiel de l'activateur organoaluminique parce qu'il assure une activité et une stéréospécificité maximales du système catalytique.

La polymérisation peut être effectuée selon n'importe quel procédé connu : en solution ou en suspension dans un solvant ou un diluant hydrocarboné inerte, tel que ceux définis en rapport avec la préparation des particules et qui est de préférence choisi parmi le butane, le pentane, l'hexane, l'heptane, le cyclohexane, le méthylcyclohexane ou leurs mélanges. On peut également opérer la polymérisation dans le monomère ou un des monomères maintenu à l'état liquide ou encore en phase gazeuse. L'introduction, dans le milieu de polymérisation, des particules contenant un composé (T) en suspension dans une huile selon l'invention présente une série d'avantages : grâce aux vitesses de sédimentation réduites des particules dans les suspensions selon l'invention, le dépôt de particules dans les dispositifs destinés à les introduire dans le milieu de polymérisation (réservoirs, tubulures, vannes) est évité avec ses inconvénients tels que croûtages et bouchages, surchauffes locales, hétérogénéité de concentration et hétérogénéité des propriétés des polymères obtenus.

La température de polymérisation est choisie généralement entre 20 et 200°C et de préférence entre 50 et 90°C, les meilleurs résultats étant obtenus entre 65 et 85°C. La pression est choisie généralement entre la pression atmosphérique et 80 atmosphères et de préférence entre 10 et 50 atmosphères. Cette pression est bien entendu fonction de la température utilisée.

La polymérisation peut être effectuée en continu ou en discontinu.

Le composé organométallique et la suspension de particules peuvent être ajoutés séparément au milieu de polymérisation. On peut également les mettre en contact, à une température comprise entre - 40 et 80°C, pendant une durée qui est dépendante de cette température et qui peut aller de quelques secondes à plusieurs heures, avant de les introduire dans le réacteur de polymérisation.

La quantité totale de composé organométallique mise en oeuvre n'est pas critique; elle est en général supérieure à 0,1 mmole par litre de diluant, de monomère liquide, ou de volume de réacteur, de préférence supérieure à 0,5 mmole par litre.

La suspension de particules mise en oeuvre est déterminée en fonction de sa teneur en composé (T). Elle est choisie en général de manière que la concentration du milieu de polymérisation soit supérieure à 0,01 mmole de composé (T) par litre de diluant, de monomère liquide ou de volume de réacteur et de préférence supérieure à 0,05 mmole par litre.

Le rapport des quantités de composé organométallique et de solide catalytique préactivé n'est pas critique non plus. On le choisit généralement de manière que le rapport molaire composé organométallique/$TiCl_3$ présent dans le solide soit compris entre 0,5 et 20 et de préférence entre 1 et 15. Les meilleurs résultats sont obtenus lorsque le rapport molaire est compris entre 2 et 12.

Les suspensions de particules contenant des composés (T) ont en général, à composition et concentration en composé (T) comparable, le même comportement en polymérisation que leurs homologues en suspension dans un diluant hydrocarboné conventionnel ou que les particules séchées correspondantes.

On a toutefois constaté une amélioration de l'activité catalytique de l'ordre de 15 % environ lorsque l'huile utilisée pour suspendre les particules est une huile de silicone.

Les exemples suivants servent à illustrer l'invention.

## Exemples 1 à 3

L'exemple 1 est donné à titre de comparaison.

### A. Préparation des particules contenant un composé (T)

Ces particules sont préparées comme indiqué à l'exemple 4 du brevet FR-A-2604439.

Après la décantation terminant cette préparation, les particules du solide obtenu, qui sont sphéroïdales (rapport D/d = 1,19), sont soumises à une détermination de distribution granulométrique par la méthode d'analyse d'image qui conduit aux résultats suivants :

$D_n$ = 25,8 µm
$D_w$ = 26,7 µm
$D_w/D_n$ = 1,03.

Ces particules sont remises en suspension (40 % en poids) dans l'hexane. Cette suspension est appelée ci-après suspension C.

B. Préparation de suspensions des particules dans des huiles

A une première partie de cette suspension C sont ajoutés 100 % en poids, par rapport à l'hexane, d'une huile minérale de 31 cSt de viscosité cinématique (25°C) (produit BLANDOL WHITE MINERAL OIL de UNION CARBIDE).

A une seconde partie de cette suspension C sont ajoutés 100 % en poids, par rapport à l'hexane, d'une huile de silicone de 50 cSt de viscosité cinématique (25°C), commercialisée par RHÔNE-POULENC sous la dénomination "huile Rhodorsil 47 V50".

L'hexane est progressivement chassé des deux dernières suspensions mentionnées dans un dispositif constitué d'un autoclave de 1 l, thermostatisé à 40°C et muni d'une vanne de fond au travers de laquelle de l'azote sec est envoyé dans la suspension à un débit de 50 l/h à 25°C sous agitation (150 tr/min).

L'hexane entraîné est récupéré dans un condenseur à serpentin plongé dans un bain refroidi à - 78°C.

La suspension de particules dans l'huile minérale est appelée ci-après suspension A.

La suspension de particules dans l'huile de silicone est appelée ci-après suspension B.

On a mesuré expérimentalement les vitesses de sédimentation relatives des particules dans les suspensions A et B par rapport à celles des particules suspendues dans l'hexane (suspension C). Ces mesures ont été faites par pointage au cours du temps de l'interface liquide-solide : les vitesses absolues ont été calculées sur la base du coefficient angulaire de la partie droite de la courbe expérimentale obtenue et les vitesses relatives ont été estimées par le quotient entre les vitesses absolues mesurées dans l'hexane et dans l'huile considérée.

Les résultats sont consignés dans le tableau I ci-après.

Tableau I

| Exemple | 1 | 2 | 3 |
|---|---|---|---|
| Suspension | C | A | B |
| Nature du milieu de suspension | Hexane | Huile minérale | Huile de silicone |
| Vitesse relative de sédimentation | 1 | 105 | 370 |
| Poids spécifique apparent (PSA) des particules (g/l) | 756 | 752 | 784 |

On constate donc une vitesse de sédimentation relative beaucoup plus lente (respectivement 105 et 370 fois) des particules des suspensions A et B sans modification significative de leur PSA.

Exemple 4

La suspension A est additionnée de 5 % en poids (par rapport au poids de particules contenant le composé (T)) d'une silice colloïdale commercialisée par DEGUSSA sous la dénomination AEROSIL 200.

La vitesse relative de sédimentation est encore ralentie 5,5 fois. De plus, le PSA des particules contenant le composé (T) diminue de 752 à 472 g/l, ce qui en facilite notablement la remise en suspension.

Exemples 5 à 9

L'exemple 5 est donné à titre de comparaison.

Ces exemples sont destinés à montrer le comportement, en polymérisation du propylène, des suspensions A et B (1) définies aux exemples 2 et 3, par rapport à la suspension C (de comparaison).

Dans un autoclave de 5 l, préalablement séché et maintenu sous atmosphère d'azote sec, on introduit, sous balayage d'azote :

- 3,2 mmoles de DEAC (sous forme d'une solution à 80 g/l dans l'hexane);
- une quantité de suspension équivalant à environ 100 mg de particules contenant le composé (T);
- de l'hydrogène sous une pression partielle de 1 bar;
- 3 l de propylène liquide.

On maintient le réacteur à 70°C sous agitation pendant 3 heures. Ensuite, on dégaze le propylène excédentaire et on récupère le polypropylène (PP) formé.

Les résultats des essais de polymérisation sont rassemblés dans le Tableau II ci-après.

(1) L'huile de silicone utilisée présente une viscosité cinématique de 2 cSt (huile Rhodorsil 47 V2 de RHÔNE-POULENC).

Tableau II

| Exemple | 5 | 6 | 7 | 8 | 9 |
|---|---|---|---|---|---|
| Suspension utilisée | C | A | A additionnée de 5 % en poids de silice colloïdale (1) | B | B additionnée de 5 % en poids de silice colloïdale (1) |
| Activité catalytique (g PP/g $TiCl_3$ contenu dans les particules x h) | 4704 | 4814 | 4928 | 5447 | 5750 |
| Fraction du PP insoluble dans l'heptane bouillant (% de la quantité totale de polymère solide recueilli) | 96,8 | 96,9 | 96,9 | 96,1 | 95,6 |
| PSA du PP (g/l) | 523 | 520 | 512 | 520 | 518 |
| Indice de fluidité en fondu (MFI) du PP (g/10 min) (norme ASTM D 1238; 2,16 kg - 230°C) | 14,7 | 5,9 | 14,6 | 9,4 | 14,3 |

(1) voir exemple 4

On constate l'effet bénéfique sur l'activité catalytique de l'introduction des particules dans le milieu de polymérisation sous forme d'une suspension dans une huile de silicone, surtout lorsqu' elle est additionnée de silice.

## Revendications

1. Suspensions de particules contenant un composé de métal de transition (T) dans une huile, caractérisées

en ce que les particules sont sphéroïdales, de rapport D/d entre leur grand axe (D) et leur petit axe (d) inférieur à 2 et ont une distribution granulométrique étroite, dans laquelle le rapport $D_w/D_n$ entre leur diamètre moyen en poids ($D_w$) et leur diamètre moyen en nombre ($D_n$) est inférieur à 3.

2. Suspensions selon la revendication 1, caractérisées en ce que le composé de métal de transition (T) est le titane.

3. Suspensions selon la revendication 1, caractérisées en ce que les particules contiennent du trichlorure de titane complexé par un composé électrodonneur.

4. Suspensions selon la revendication 3, caractérisées en ce que les particules ont un diamètre compris entre 10 et 50 micromètres (microns).

5. Suspensions selon la revendication 3, caractérisées en ce que les particules résultent du traitement d'activation, par le produit de la réaction d'un composé organoaluminique avec un composé choisi parmi les composés hydroxyaromatiques dont le groupe hydroxyle est stériquement bloqué, d'un précurseur dont la composition répond à la formule :

$$TiCl_3.(AlRCl_2)_x.C_y$$

où R est un radical alkyle comprenant de 2 à 6 atomes de carbone, C est un composé électrodonneur tel que défini plus haut, x est un nombre quelconque inférieur à 0,20 et y un nombre quelconque supérieur à 0,009 et en général inférieur à 0,20.

6. Suspensions selon la revendication 5, caractérisées en ce que les particules sont soumises, à un moment quelconque de leur préparation, à un traitement de prépolymérisation consistant à les mettre au contact avec une alpha-monooléfine inférieure dans des conditions polymérisantes de manière à obtenir un solide contenant de 5 à 500 % en poids environ d'alpha-monooléfine prépolymérisée.

7. Suspensions selon l'une quelconque des revendications 1 à 6, caractérisées en ce que l'huile est choisie parmi les huiles minérales et les huiles de silicone.

8. Suspensions selon l'une quelconque des revendications 1 à 6, caractérisées en ce que les particules représentent de 20 à 70 % du poids total de la suspension.

9. Suspensions selon l'une quelconque des revendications 1 à 8, caractérisées en ce que l'huile est additionnée d'une silice colloïdale, à raison de 2 à 15 % en poids par rapport au poids de particules.

10. Procédé pour la polymérisation des alpha-oléfines, effectué en présence d'un activateur organoaluminique et de particules sphéroïdales, de rapport D/d entre le grand axe (D) et le petit axe (d) inférieur à 2 et de distribution granulométrique étroite, de rapport $D_w/D_n$ entre le diamètre moyen en poids ($D_w$) et le diamètre moyen en nombre ($D_n$) inférieur à 3, contenant un composé de métal de transition (T), caractérisé en ce que les particules sont introduites dans le milieu de polymérisation sous forme d'une suspension dans une huile.

## Patentansprüche

1. Suspensionen von Partikeln enthaltend eine Übergangsmetallverbindung (T) in einem Öl, dadurch gekennzeichnet, daß die Partikel sphäroidisch sind mit einem Verhältnis D/d zwischen ihrer großen Achse (D) und ihrer kleinen Achse (d) kleiner als 2 und sie eine enge granulometrische Verteilung haben, in der das Verhältnis $D_w/D_n$ zwischen ihrem mittleren Durchmesser in Gewicht ($D_w$) und ihrem mittleren Durchmesser in Zahl ($D_n$) kleiner als 3 ist.

2. Suspensionen nach Anspruch 1, dadurch gekennzeichnet, daß die übergangsmetallverbindung (T) Titan ist.

3. Suspensionen nach Anspruch 1, dadurch gekennzeichnet, daß die Partikel durch eine Elektronendonor-Verbindung komplexiertes Titantrichlorid enthalten.

4. Suspensionen nach Anspruch 3, dadurch gekennzeichnet, daß die Partikel einen Durchmesser zwischen 10 und 50 Mikrometer (Mikron) haben.

5. Suspensionen nach Anspruch 3, dadurch gekennzeichnet, daß die Partikel hervorgehen aus einer Aktivierungsbehandlung durch das Produkt der Reaktion einer Organoaluminiumverbindung mit einer Verbindung ausgewählt unter den hydroxyaromatischen Verbindungen, deren Hydroxylgruppe sterisch blockiert ist, eines Vorläufers, dessen Zusammensetzung der Formel:

$$TiCl_3.(AlRCl_2)_x.C_y$$

entspricht, worin R ein Alkylrest umfassend 2 bis 6 Kohlenstoffatome ist, C eine Elektronendonor-Verbindung ist, wie weiter oben definiert, x eine beliebige Zahl kleiner als 0,20 ist und y eine beliebige Zahl größer als 0,009 und im allgemeinen kleiner als 0,20 ist.

6. Suspensionen nach Anspruch 5, dadurch gekennzeichnet, daß die Partikel bei einem beliebigen Zeitpunkt ihrer Herstellung einer Vorpolymerisations-Behandlung unterzogen werden, die darin besteht, daß sie in Kontakt gebracht werden mit einem niedrigen alpha-Monoolefin unter Polymerisationsbedingungen solcher Art, daß man einen Feststoff erhält, der ungefähr 5 bis 500 Gew.-% vorpolymerisiertes alpha-Monoolefin enthält.

7. Suspensionen nach einem der Ansprüche 1 bis 6, dadurch gekennzeichnet, daß das Öl ausgewählt ist unter den Mineralölen und den Silikonölen.

8. Suspensionen nach einem der Ansprüche 1 bis 6, dadurch gekennzeichnet, daß die Partikel 20 bis 70 % des Gesamtgewichts der Suspension darstellen.

9. Suspensionen nach einem der Ansprüche 1 bis 8, dadurch gekennzeichnet, daß dem Öl kolloidale Kieselerde in einer Menge von 2 bis 15 Gew.-% bezogen auf das Gewicht der Partikel zugesetzt wird.

10. Verfahren zur Polymerisation von alpha-Olefinen, das in Gegenwart eines Organoaluminium-Aktivators und von sphäroidischen Partikeln mit einem Verhältnis D/d zwischen der großen Achse (D) und der kleinen Achse (d) kleiner als 2 und einer engen granulometrischen Verteilung, mit einem Verhältnis $D_w/D_n$ zwischen dem mittleren Durchmesser in Gewicht ($D_w$) und dem mittleren Durchmesser in Zahl ($D_n$) kleiner als 3, enthaltend eine Übergangsmetallverbindung (T) durchgeführt wird, dadurch gekennzeichnet, daß die Teilchen in das Polymerisationsmedium in Form einer Suspension in einem Öl eingeführt werden.

## Claims

1. Suspensions of particles containing a transition metal compound (T) in an oil, characterized in that the particles are spheroidal, with a ratio D/d of their large axis (D) to their small axis (d) lower than 2 and have a narrow particle size distribution, in which the ratio $D_w/D_n$ of their weight-average diameter ($D_w$) to their number-average diameter ($D_n$) is lower than 3.

2. Suspensions according to Claim 1, characterized in that the transition metal compound (T) is titanium.

3. Suspensions according to Claim 1, characterized in that the particles contain titanium trichloride complexed with an electron-donor compound.

4. Suspensions according to Claim 3, characterized in that the particles have a diameter of between 10 and 50 micrometres (microns).

5. Suspensions according to Claim 3, characterized in that the particles result from the treatment of activation, using the product of the reaction of an organoaluminium compound with a compound chosen from hydroxyaromatic compounds in which the hydroxyl group is stearically hindered, of a precursor whose composition corresponds to the formula:

$$TiCl_3 \cdot (AlRCl_2)_x \cdot C_y$$

where R is an alkyl radical containing from 2 to 6 carbon atoms, C is an electron-donor compound such as defined above, x is any number smaller than 0.20 and y is any number larger than 0.009 and generally smaller than 0.20.

6. Suspensions according to Claim 5, characterized in that the particles are subjected, at any time in their preparation, to a prepolymerization treatment consisting in bringing them into contact with a lower alpha-monoolefin in polymerizing conditions so as to obtain a solid containing approximately from 5 to 500 %

by weight of prepolymerized alpha-monoolefin.

7. Suspensions according to any one of Claims 1 to 6, characterized in that the oil is chosen from mineral oils and silicone oils.

8. Suspensions according to any one of Claims 1 to 6, characterized in that the particles represent from 20 to 70% of the total weight of the suspension.

9. Suspensions according to any one of Claims 1 to 8, characterized in that a colloidal silica is added to the oil in a proportion of 2 to 15% by weight relative to the weight of particles.

10. Process for the polymerization of alpha-olefins, carried out in the presence of an organoaluminium activator and of spheroidal particles, with a ratio D/d of the large axis (D) to the small axis (d) lower than 2 and of narrow particle size distribution, with a ratio $D_w/D_n$ of the weight-average diameter ($D_w$) to the number-average diameter ($D_n$) lower than 3, containing a transition metal compound (T), characterized in that the particles are introduced into the polymerization medium in the form of a suspension in an oil.